# EUROPÄISCHE PATENTSCHRIFT

(11) **EP 3 086 050 B1**
(45) Veröffentlichungstag und Bekanntmachung des Hinweises auf die Patenterteilung: **18.11.2020**
(21) Anmeldenummer: 15020121.8
(22) Anmeldetag: 19.07.2015
(51) Int. Cl.: F28D 9/00, F28D 21/00, F28F 21/06, F28F 21/08, F24F 7/00, F24F 12/00

(54) **DEZENTRAL EINBAUBARE BELÜFTUNGSVORRICHTUNG**
VENTILATION DEVICE INSTALLED ON A DECENTRALISED BASIS
DISPOSITIF D'AERATION DECENTRALISE ENCASTRABLE

(30) Priorität: 23.04.2015 DE 102015106297
(43) Veröffentlichungstag der Anmeldung: 26.10.2016
(73) Patentinhaber: Komor, Stanislaus, 64823 Groß-Umstadt (DE)
(72) Erfinder: Komor, Stanislaus, 64823 Groß-Umstadt (DE)
(74) Vertreter: Knauer, Martin

(56) Entgegenhaltungen:
- EP-A1- 1 331 453
- DE-A1- 3 347 028
- DE-A1- 4 210 530
- US-A1- 2013 126 123
- US-A1- 2013 264 031

## Beschreibung

Gegenstand der Erfindung sind eine dezentral einbaubare Belüftungsvorrichtung, ein konstruktiv günstiger Wärmetauscher und ein Wärmetauschelement, welches in Wärmetauschern verwendet werden kann.

Energiesparmaßnahmen sind auf dem Bausektor ein immer weiter verbreitetes Mittel zur Senkung von Kosten, aber auch zur Schonung wertvoller Ressourcen, wie fossiler Brennstoffe. Dabei werden einerseits immer effizientere Verbrennungsanlagen entwickelt, andererseits wird auch versucht, durch immer bessere Dämmmaßnahmen, wie durch Anbringen einer Thermohaut aus Dämmmaterial, das Entweichen von Wärme aus beheizten Räumen in Gebäuden zu unterbinden. Als ein wesentlicher Grund für Energieverluste aus Gebäuden war auch die ungenügende Dichtigkeit von Fenstern und Türen erkannt worden. Denn durch Spalten zwischen Fenstern und der Laibung war oftmals in unkontrollierter Weise warme Luft aus den Räumen nach außen entwichen. Die zunehmende Schließung und Vermeidung von Spalten sowie unzureichendes Lüftungsverhalten der Bewohner hat jedoch zur Folge, dass verbrauchte Luft nicht mehr ausreichend aus den Räumen entfernt wird, sodass sich Feuchtigkeit in den Wänden niederschlägt. Die mangelhafte Belüftung führte aber auch dazu, dass sich Bakterien in den Räumen ansiedelten. Um diese negativen Auswirkungen der Dämmmaßnahmen zu reduzieren, wurden Lüftungsanlagen entwickelt, durch die mittels Ventilatoren eine aktive und kontrollierte Belüftung sichergestellt wird.

Die US2013/0126123 A1 offenbart eine Belüftungsvorrichtung gemäß dem Oberbegriff von Anspruch 1. Die Vorrichtung kommt zwar ohne Gebläse aus, jedoch sind Abluftauslass und Zulufteinlass auf der Raumseite in einem unteren Bereich direkt benachbart vorgesehen. Damit wird ein gleichmäßiger Luftwechsel im Raum erschwert. Ferner ist in der DE 4210530 A1 eine Lüftungseinrichtung für eine Wohnung beschrieben, bei der die Abluft durch einen Ventilator aus dem Raum von unten durch einen Gegenstromwärmetauscher nach außen gefördert wird. Im Gegenzug wird Frischluft durch einen weiteren Ventilator durch den Gegenstromwärmetauscher in den Raum gefördert. In diesem System wird sowohl die Abluft als auch die Frischluft von unten in das System geleitet. Die Luftführung im Wärmetauscher selbst ist so gestaltet, dass die unten in den Wärmetauscher eingeführte Frischluft nach ihrer Aufwärmung oben aus dem Wärmetauscher in den Raum entweicht.

Aufgabe der vorliegenden Erfindung war es, ein Belüftungssystem zur Verfügung zu stellen, welches ohne aktive Luftbewegungsvorrichtung, d.h. ohne einen Ventilator auskommt.

Diese Aufgabe wird durch eine Belüftungsvorrichtung mit den Merkmalen von Anspruch 1 gelöst. Bevorzugte Ausführungsformen dieser Belüftungsvorrichtung sind in den abhängigen Ansprüchen definiert.

Ein weiterer Gegenstand der Erfindung ist ein Verfahren zum Einbau einer Belüftungsvorrichtung mit den Merkmalen von Anspruch 9.
In Figur 1 ist eine in eine Mauer neben einem Fenster eingebaute erfindungsgemäße Vorrichtung gezeigt.
In Figur 2 ist eine 3D-Ansicht einer erfindungsgemäßen Belüftungsvorrichtung mit Einlassöffnung für frische Zuluft und Auslassöffnungen für verbrauchte Abluft sowie Kanälen für die Frischluft und die Fortluft gezeigt.
In Figur 3 ist ein vertikaler Schnitt durch die in Figur 2 gezeigte Vorrichtung im Detail gezeigt.
In Figur 4 ist ein horizontaler Schnitt durch den unteren Teil der Vorrichtung aus Figur 2 in in eine Fensterlaibung eingebautem Zustand gezeigt.
In Figur 5 ist ein vertikaler Schnitt durch den linken Teil der Vorrichtung aus Figur 2 in in eine Fensterlaibung eingebautem Zustand gezeigt.
In Figur 6 ist ein Wärmetauschelementepaket eines erfindungsgemäßen Wärmetauschers mit je einem Verteiler oben und unten sowie einem dazwischenliegenden Teil mit parallelen Luftführungskanälen gezeigt.
In Figur 7 ist der Ausschnitt b aus Figur 6 gezeigt, in dem der Verteiler auf die Enden der Kanäle trifft.
Figur 8 zeigt beispielhaft den Übergang vom Profil einer Lamelle zum Profil eines Lenkblatts (entsprechend Ausschnitt a aus Fig. 6)
Figur 9 zeigt einen Ausschnitt einer Aufsicht auf ein Wärmetauschelementepaket von oben.
Figur 10 zeigt ein erfindungsgemäßes Wärmetauschelement mit einer längs gerippten Lamelle und zwei an deren schmalen Seiten angrenzenden Lenkblättern.
Figur 11 zeigt ein erfindungsgemäßes Wärmetauschelement nach Figur 10 vom schmalen Ende her gesehen.
Figur 12 zeigt eine unabhängig vom Fenster in einer Raumecke fast über die ganze Raumhöhe eingebaute erfindungsgemäße Belüftungsvorrichtung.

Die erfindungsgemäße Belüftungsvorrichtung dient dazu, verbrauchte Abluft aus einem Raum in einem Gebäude durch frische Zuluft von außerhalb des Raumes zu ersetzen. Die Erfindung macht sich die Luftdruckunterschiede im beheizten Raum zunutze, sodass die verbrauchte, warme Luft aus dem Raum in den oberen Teil eines Wärmetauschers eintritt und in dessen unteren Teil nach außen verlässt. Je höher der Wärmetauscher ist, desto größer ist dieser Luftdruckunterschied. Dabei wird die Luft durch die in gegenläufig parallel angeordneten Kanälen entgegenströmende kalte Luft abgekühlt und fällt nach unten. Ein Ventilator zum Entfernen der verbrauchten Luft ist somit nicht erforderlich. Die in den Wärmetauscher eintretende kalte Luft wird von unten in den Wärmetauscher eingeführt und steigt wegen der Erwärmung im Wärmetauscher von selbst durch die Kanäle nach oben. Da in beheizten, geschlossenen Räumen der Luftdruck im oberen Bereich des Raums höher ist als im unteren Bereich des Raums, strömt die frische Zuluft in den unteren Bereich des Raumes ein.

Die erfindungsgemäße Vorrichtung eignet sich besonders als dezentrale Belüftungsvorrichtung. Dezentral bedeutet, dass jeweils mehrere Räume in einem Gebäude mit jeweils mindestens einer erfindungsgemäßen Vorrichtung ausgerüstet sind. Die erfindungsgemäße Vorrichtung kann an jeder beliebigen Stelle des Raumes in der Nähe einer Wand eingebaut sein, beispielsweise in einer Raumecke. Bevorzugt ist der Einbau in Fensternähe.

Bevorzugt sind in einem Raum mehrere erfindungsgemäße Vorrichtungen vorhanden. Besonders bevorzugt ist in der Nähe jeden Fensters eine solche Vorrichtung eingebaut. Aufgrund der vertikalen Ausrichtung des Wärmetauschers ist es möglich, die Vorrichtung seitlich neben ein Fenster einzubauen. Bevorzugt ist die Vorrichtung in die Maueröffnung, in der sich auch das Fenster befindet, integriert. Dies eröffnet die Möglichkeit, die Vorrichtung in die Fensterlaibung zu integrieren, wobei der raumseitige Abluftauslass im oberen Teil des Fensters und der Zulufteinlass im unteren Teil des Fensters vorgesehen ist. In einer bevorzugten Ausführung sind der außenseitige Abluftauslass und der Zulufteinlass in Nähe der Fensterbank, bevorzugt unter der Fensterbank, vorgesehen. Dies reduziert die Anzahl und die Länge der erforderlichen Ein- und Auslasskanäle und erlaubt eine vollständige Integration mit der Baulichkeit eines Raumes (Mauer, Fenster) so dass von innen außer den Ein- und Auslässen nichts sichtbar ist. Von außen gilt dies genauso, wobei die Fortluftführung in die Thermohaut des Gebäudes und weiter durch einen Schlitz unter der Fensterbank kaschiert geführt werden kann, sodass der Auslass in Frontalansicht von außen ebenfalls nicht sichtbar ist. Wenn im Zusammenhang mit der erfindungsgemäßen Belüftungsvorrichtung von außen gesprochen wird, bezieht sich außen auf außerhalb des Raums, bevorzugt außerhalb des Gebäudes, in dem der Raum belegen ist.

Abluft ist die Luft, welche aus dem Raum nach außen gelangen soll. Dies ist in der Regel verbrauchte Luft, und sie ist bei beheizten Räumen in der Regel wärmer als die Luft außen. Unter Fortluft wird die nach außen abgegebene Abluft verstanden, die den Wärmetauscher bereits durchströmt hat und die daher bereits abgekühlt wurde. Unter Frischluft wird die Luft verstanden, die von außen in den Wärmetauscher einströmt und aufgewärmt werden soll. Sie ist in der Regel kälter als die Luft in dem Raum. Zuluft ist die Luft, welche von außen in den Raum gelangt und in der erfindungsgemäßen Vorrichtung erwärmt wurde, also aufgewärmte Frischluft.

Eine Belüftungsvorrichtung ist eine Vorrichtung, durch welche Abluft aus einem Raum nach außen und Zuluft von außen in denselben Raum hinein gelangt. Die Ströme der Zuluft und der Abluft sind hierzu strömungstechnisch voneinander getrennt. Dadurch findet in der Belüftungsvorrichtung bevorzugt keine Vermischung der beiden Luftströme der Zuluft und der Abluft miteinander statt. Erreicht wird dies dadurch, dass die Kanäle, durch welche die gegenläufigen Ströme durch die Vorrichtung geführt werden, nicht miteinander verbunden, sondern gegeneinander möglichst luftdicht abgedichtet sind. Bevorzugt liegen auch der Zulufteinlass und der Abluftauslass im Raum so weit voneinander entfernt, dass die Vermischung von Abluft und Zuluft möglichst gering ist. Dies ist insbesondere dann gegeben, wenn sich die Vorrichtung über mehr als die Hälfte der Raumhöhe erstreckt. Dasselbe gilt für den Frischlufteinlass und den Fortluftauslass außen.

Strömungsrichtung der Luft im Wärmetauscher ist die Richtung, in welcher die Luft fließt. Die Strömungsrichtung im Wärmetauscher ist für die Abluft von oben nach unten und für die Zuluft von unten nach oben. Da der Wärmetauscher vertikal eingebaut ist, ergibt sich jeweils eine Strömungsrichtung längs des Wärmetauschers.

Bei der Dimensionierung der erfindungsgemäßen Belüftungsvorrichtung spielt die Dimension des Wärmetauschers eine entscheidende Rolle. Er sollte vollständig in der erfindungsgemäßen Belüftungsvorrichtung untergebracht werden können und ist somit kleiner als die Vorrichtung. Die Dimensionen des Wärmetauschers wiederum sind so ausgelegt, dass der Wärmetausch möglichst vollständig ist. Diese können anhand einiger einfacher Versuche optimiert werden.

In der Höhe ist die Länge der Vorrichtung durch die Raumhöhe begrenzt. Räume in Wohngebäuden haben üblicherweise eine Höhe von nicht mehr als 3 m, sodass die übliche Einbauhöhe der Vorrichtung weniger als 3 m beträgt. Für den Fall, dass die Vorrichtung neben einem Fenster in der Fensteröffnung eingebaut ist, ist die Höhe der Vorrichtung ungefähr die Höhe des Fensters. Bei Einbau in die Fensterlaibung baut man die Vorrichtung bevorzugt zwischen der Oberkante der Fensterbank und der Unterkante des Fenstersturzes ein. Bei einer üblichen Fensterhöhe eines Wohngebäudes ist die Vorrichtung daher zwischen 50 cm und 2,25 m, bevorzugt zwischen 50 cm und 1,5 m hoch.

Hinsichtlich der anderen Dimensionen der Vorrichtung sind die baulichen Gegebenheiten, wie in der Tiefe die Mauerstärke und in der Breite die Breite der Fensteröffnung, und die Menge des gewünschten Luftaustauschs, welcher wiederum von der Größe des zu belüftenden Raumes und dem Vorhandensein weiterer Belüftungsvorrichtungen abhängt, zu berücksichtigen. In der Regel ist die Ausdehnung der Vorrichtung senkrecht zur Mauer (Tiefe) geringer als 30 cm und bevorzugt mehr als 10 cm. Für die Breite des Wärmetauschers hat sich eine Ausdehnung von zwischen 30 cm und 5 cm neben einem Fenster für eine genügende Belüftung eines Raums bis zu einer Raumtiefe von 7 m als ausreichend erwiesen.

Ziel der vorliegenden Erfindung ist es, der Abluft Wärme zu entziehen und diese der Zuluft zuzuführen. Hierzu enthält die erfindungsgemäße Vorrichtung einen Gegenstromwärmetauscher. In ihm wird die Abluft abgekühlt und die Frischluft aufgewärmt. Der Wärmetauscher ist vertikal eingebaut, sodass die Abluft den Wärmetauscher von oben nach unten und die Frischluft den Wärmetauscher von unten nach oben durchströmen kann. Dadurch ändert sich das Temperaturprofil in den Luftströmen von oben nach unten. Die Temperatur der Abluft nimmt von oben nach unten ab, und die Temperatur der Zuluft nimmt von unten nach oben zu. Bevorzugt findet der Wärmetausch über sich vertikal über die Länge des Wärmetauschers erstreckende Wärmetauschplatten statt, deren eine Seite mit der Frischluft in Kontakt steht und deren andere Seite mit der Abluft in Kontakt steht, und welche die Wärmetauschflächen bilden.

Dies wird dadurch erreicht, dass der Wärmetauscher benachbart liegende Wärmetauschplatten aufweist, zwischen denen die Luftströme gegenläufig parallel in Strömungskanälen geführt werden, die sich von oben nach unten und von unten nach oben erstrecken.

Geeignete Gegenstromwärmetauscher sind bekannt. In ihnen sind die Strömungskanäle so eng, bzw. ist der Abstand zwischen benachbarten Wärmetauschflächen so klein, dass die durch die Kanäle strömende Luft ihre Wärme schnell an die nächstliegende Wärmetauschplatte abgeben oder die Wärme von ihr aufnehmen kann. Es sind auch Wärmetauscher beschrieben, bei denen die Wärmetauschplatten zusätzliche senkrecht zum Strömungsverlauf verlaufende Einbauten oder Vorsprünge aufweisen, welche für Turbulenzen in den Strömen sorgen und somit die Effizienz des Wärmeaustauschs erhöhen. Derartige Wärmetauscher sind beispielsweise in DE 3329557 beschrieben.

Der Wärmetauscher enthält außer dem Bereich, der die Strömungskanäle enthält, einen oder mehrere Bereiche, in denen die jeweiligen Luftströmungen aus den Strömungskanälen vereint bzw. auf die Strömungskanäle verteilt werden. Diese Funktion wird durch sogenannte Verteiler wahrgenommen. Der Bereich mit den Strömungskanälen nimmt bevorzugt zwischen 95% und 50%, weiter bevorzugt zwischen 90% und 80% der Höhe des Wärmetauschers ein. Der Rest der Höhe des Wärmetauschers wird bevorzugt durch den oder die Verteiler ausgefüllt. Bevorzugt weist der Wärmetauscher an jedem seiner beiden Enden, d.h. oben und unten, einen Verteiler auf. Die Verteiler und die Wärmetauschplatten des Wärmetauschers sind bevorzugt miteinander fest verbunden. In einer bevorzugten Ausführungsform sind Verteiler und Wärmetauschplatten einteilig ausgeführt.

In der DE 4210530 handelt es sich bei den Strömungskanälen um flache, sich über die gesamte Tiefe des Wärmetauschers erstreckende Kanäle mit einer konstanten Breite. Diese Geometrie ist zwar für Wärmetauscher für die Verwendung in der erfindungsgemäßen Vorrichtung prinzipiell geeignet, jedoch ist ein Wärmetauscher mit dieser Geometrie nicht sehr effizient. Bevorzugt im Sinne der Erfindung sind wegen ihrer höheren Effizienz Wärmetauscher, bei denen die Abstände zwischen den Wärmetauschplatten über die Tiefe des Wärmetauschers unterschiedlich sind.

Bevorzugt handelt es sich bei den Wärmetauschplatten um dreidimensional strukturierte Platten. Besonders bevorzugt sind die Wärmetauschplatten einzelne, dreidimensional strukturierte Wärmetauschelemente. Der Wärmetauscher enthält dann parallel nebeneinander gestapelte Wärmetauschelemente. Durch die dreidimensionale Struktur ergeben sich zwischen den Wärmetauschelementen Strömungskanäle. Besonders bevorzugt sind die Wärmetauschplatten Wärmetauschelemente, die Bereiche für den Verteiler und die Kanäle aufweisen, wie die weiter unten beschriebenen erfindungsgemäßen Wärmetauschelemente.

Die Ausmaße der Strömungskanäle werden so gewählt, dass ausreichend große Wärmetauschflächen zur Verfügung stehen. Im Fall eines neben einem üblichen Fenster eingebauten Wärmetauschers sind daher die Wärmetauschplatten im Wärmetauscher zwischen 30 cm und 2,0m, bevorzugt zwischen 30 cm und 1,2 m lang und zwischen 5 cm und 30 cm breit.

Die Abstände zwischen den Wärmetauschplatten sind nach Bedarf zu optimieren. Wenn die Kanäle zu breit sind bzw. der Lamellenquerschnitt zu groß ist, kann der Wirkungsgrad des Wärmetauschs sinken. Wenn dagegen die Kanäle zu eng sind, kann der Luftströmungswiderstand zu hoch für eine ausreichende Belüftung sein. Die Breite kann je nach Form entweder der Durchmesser des Kanals (bei kreisrundem Querschnitt), die Diagonale zwischen den Ecken des Kanals (bei quadratischem oder rechteckigem Querschnitt) oder der Abstand von Wärmetauschfläche zu Wärmetauschfläche (bei planparallelen Platten) sein. Im Sinne der Erfindung haben die Kanäle bevorzugt eine maximale Breite von zwischen 2 cm und 0,4 cm.

Die Wärmetauschplatten sind bevorzugt aus einem Material, welches den Durchtritt der Wärme aus einem Kanal durch die ihn begrenzenden Wärmetauschflächen hindurch in einen angrenzenden Kanal ermöglicht. Somit sind dafür besonders Materialien mit hoher Wärmeleitfähigkeit geeignet, wie Metalle. Metalle haben den weiteren Vorteil, dass die strukturierten Wärmetauschplatten besonders einfach durch Stanzen hergestellt und dreidimensional verformt werden können. Besonders geeignetes Material ist Aluminium. Die Dicke des Materials liegt zwischen 0,1 und 1 mm, bevorzugt zwischen 0,15 und 0,3 mm.

Ein Verteiler dient dazu, Luftströme aus Kanälen mit derselben Strömungsrichtung zu vereinigen oder einen Luftstrom auf Kanäle mit derselben Strömungsrichtung zu verteilen. Aus diesem Grund ist es nicht erforderlich, den Verteiler aus einem Material mit hoher Wärmeleitfähigkeit zu bilden. Andererseits trennen in der Regel die Wände des Verteilers auch die antiparallelen Luftströme voneinander, sodass der Wärmeaustausch im Verteiler fortgesetzt werden kann, sofern die Temperaturen noch nicht vollständig angeglichen sind. Daher ist das Material des Verteilers bevorzugt ebenfalls ein Material mit hoher Wärmeleitfähigkeit, wie ein Metall. Metalle haben jedoch noch einen weiteren entscheidenden Vorteil. Sie können durch Stanzen und Verformen so an die Enden der Strömungskanäle angepasst werden, dass ein Übertritt von Luft aus einem Schacht für die Abluft in einen Kanal für die Zuluft und vice versa nicht stattfinden kann. Besonders bevorzugtes Metall ist Aluminium. Neben seiner guten Verarbeitbarkeit hat es den Vorteil, dass es sehr gut recycelt werden kann. In der bevorzugten Ausführungsform sind die Wärmetauschplatten einteilig aus Aluminium.

Die Luftströme treten in den Verteiler jeweils bevorzugt horizontal, d.h. von der Seite ein, bzw. treten zur Seite aus, also bevorzugt nicht von oben oder von unten. Erforderlichenfalls ist dafür der Verteiler nach allen anderen Seiten hin abgedichtet, beispielsweise durch das Gehäuse. Wenn der Ausgang des Verteilers noch nicht die gewünschte Stelle der Auslass- oder Einlassöffnung in den Raum bzw. den Außenbereich ist, wird der Luftstrom vom Verteiler weg an die Stelle geleitet, an der die Luft in den Raum oder nach außen austreten soll. Hierzu sind in der Belüftungsvorrichtung erforderlichenfalls weitere Strömungskanäle, gewünschtenfalls auch innerhalb des Gehäuses, vorgesehen. Diese Strömungskanäle können konstruktiv Teile des Wärmetauschers sein, oder aber getrennt vom Wärmetauscher vorliegen. Bevorzugt ist ein Zulufteinlasskanal im Gehäuse von oben nach unten vorgesehen, sodass die Zuluft von oben in den unteren Bereich der Vorrichtung geführt wird und dort in den Raum austritt.

Zweckmäßigerweise befinden sich die genannten Teile des Wärmetauschers in einem Gehäuse und werden dadurch zusammengehalten. Das Gehäuse kann auch dazu dienen, die Wärmetauschplatten und die Verteiler so abzudichten, dass die Luft nur an den gewünschten Aus- und Einlassöffnungen aus dem Wärmetauscher austreten und in ihn eintreten kann und die Abluft nicht in die Zuluft und vice versa übertreten kann.

In einer besonders bevorzugten Ausführungsform ist die Oberseite des Wärmetauschers elastisch gegen das Gehäuse abgedichtet. Dies kann dadurch erreicht werden, dass zwischen dem oberen Abschluss des Wärmetauschers und der oberen Gehäuseabdeckung eine weiche, luftdichte Matte, vorzugsweise nach Art von Moosgummi, vorgesehen wird. Zum noch weitergehenden Höhenausgleich kann zwischen Gehäusewand und Matte ein komprimierbares Material vorgesehen werden, beispielsweise ein Stück Schaumstoff, welches nicht unbedingt luftdicht sein muss. Diese Ausführung ermöglicht eine exakte und einfache, an Ort und Stelle vornehmbare Einpassung und Aufnahme der Wärmetauschplatten durch Kürzung des Gehäuses ohne Veränderung der Wärmetauschplatten.

In einer bevorzugten Ausführung weist die erfindungsgemäße Belüftungsvorrichtung ein Gehäuse auf, welches auf einer ersten, bevorzugt dem Fenster zugewandten, Seite des Wärmetauschers einen ersten Schacht, welcher teils als Zulufteinlasskanal und teils als Frischlufteinlasskanal dient, und auf einer zweiten, gegenüberliegenden, bevorzugt der Fensterlaibung zugewandten, Seite des Wärmetauschers einen zweiten Schacht, der teils als Fortluftauslasskanal und teils als Ablufteinlasskanal dient, vorsieht. Die Schächte erstrecken sich bevorzugt über die gesamte Länge und Tiefe des Wärmetauschers und haben eine Breite von zwischen 1 und 10 cm, bevorzugt zwischen 1 und 5 cm, besonders bevorzugt zwischen 3 und 5 cm. Sie weisen aber ferner jeweils ein Schott auf, durch welches die Schächte geteilt und die Kanäle voneinander luftdicht getrennt sind. Diese Schotts sind bevorzugt in der Nähe der Verteiler eingebaut. Durch die Schächte kann man einen Thermoeffekt und weiter zusätzliche Dämmung erreichen.

Die erfindungsgemäße Vorrichtung kann in ein Gebäude eingebaut werden, indem zunächst ein Aufnahmeteil und der Fortluftauslasskanal und der Frischlufteinlasskanal funktionsgerecht, beispielsweise neben das Fenster in die Fensteröffnung eingebaut werden und anschließend die übrige Belüftungsvorrichtung mit dem Wärmetauscher in dem Gehäuse mit dem Zulufteinlasskanal und dem Abluftauslasskanal passgenau in die Aufnahme eingesetzt und befestigt wird. Das Aufnahmeteil kann aus einem beliebigen, formstabilen Werkstoff bestehen, beispielsweise aus Beton, aber auch aus demselben Material wie der Fensterrahmen. Diese Konstruktion hat den Vorteil, dass sowohl der Wärmetauscher als auch die übrigen Komponenten vorgefertigt angeboten werden können. Ferner kann das Gehäuse mit dem Wärmetauscher schnell und unkompliziert zur Reinigung oder zum Austausch aus der Aufnahme entfernt und wieder in ihr befestigt werden.

Das Gehäuse besteht bevorzugt aus einem festen Material, sodass es die Wärmetauschplatten und den oder die Verteiler aufnehmen und in Position halten kann. Wie oben ausgeführt hat das Gehäuse Öffnungen für die Abluft, die Zuluft, die Fortluft und die Frischluft. Damit ein Wärmeübertritt aus dem Raum in die Fortluft und nach außen möglichst vermieden wird, ist das Material für das Gehäuse bevorzugt ein schlecht wärmeleitendes Material. Gut geeignet sind Kunststoffe, beispielsweise Polystyrol. Das Material des Gehäuses isoliert die Wärmetauschplatten energetisch nach außen. Somit stehen diese nicht in direktem Kontakt mit der Außenseite des Gebäudes, so dass Wärme bzw. Kälte nicht in unkontrollierter Weise nach außen abfließen kann. Optional kann im Frischlufteinlasskanal ein Filter eingebaut werden, so dass ein Großteil der Verschmutzungen, insbesondere Pollen (wichtig für Allergiker) dort hängen bleiben.

Da sich trotzdem Feststoffe mit der Zeit im Wärmetauscher festsetzen und diesen verstopfen können, ist es von Vorteil, den Wärmetauscher so in der Vorrichtung unterzubringen, dass er zur Reinigung oder zum Ersatz entnehmbar ist. Bevorzugt sind der Frischlufteinlasskanal und der Fortluftauslasskanal in unterem Bereich der Belüftungseinrichtung platziert zum Auffangen eventuell gebildeten Kondenswassers.

Wegen seiner Konstruktion ist die erfindungsgemäße Vorrichtung besonders gut einsetzbar in lärmverschmutzten Gebieten (Flugschneisen, in der Nähe von Auto- und Zugverkehr). Die Schallwellen werden deutlich abgeschwächt durch das Spalten und die Wiedervereinigung sowie den Richtungswechsel der Luftströmung innerhalb der Vorrichtung. Die Schallwellen treffen in der Belüftungsvorrichtung auf zwei exakt entkoppelte Hauptelemente (Geräteschall-Wärmetauschergehäuse), so dass eine Schallübertragung durch die Körper fast nicht möglich ist.

Die erfindungsgemäße Vorrichtung ist besonders gut geeignet zum Einbau in Zimmern von Krankenhäusern, Altersheimen, Praxen, Büros und Aufenthaltsräumen. Sie sichert die ständige Zufuhr gefilterter frischer Luft, und hält dennoch den meisten Lärm ab. Weil kein Ventilator notwendig ist, arbeitet die Belüftungsanlage geräuschlos und verbraucht keine Energie.

Die erfindungsgemäße Vorrichtung kann schon beim Bau des Hauses oder dem Einsetzen der Fenster in das Gebäude eingesetzt werden. Sie kann aber auch ohne größere bauliche Änderungen nachträglich in das Gebäude an einer gewünschten Stelle eingebaut werden. Hierzu müssen nur Öffnungen für den Frischlufteinlass und den Fortluftauslass in die Wand vorgesehen werden.

Die erfindungsgemäße Vorrichtung kann auch auf einfache Weise in bestehende oder geplante Inneneinrichtungen im Gebäude integriert werden, sogar nachträglich. Ein großer Vorteil ist, dass die Wärmetauschleistung durch die Dimensionierung flexibel einstellbar ist.

Der im Folgenden näher beschriebene erfindungsgemäße Gegenstromwärmetauscher ist besonders gut zur Verwendung in der erfindungsgemäßen Belüftungsvorrichtung geeignet. Er kann aber auch in anderen Vorrichtungen, die einen Wärmetausch benötigen, eingesetzt werden, z.B. zum Kühlen in einem Server- oder Traforaum mit Wärmegewinnung zur Heizung anderer Räume.

Der erfindungsgemäße Wärmetauscher enthält Kanäle für die Durchströmung mit abzukühlender Luft und hierzu gegenläufig parallel angrenzende Kanäle für die Durchströmung mit aufzuwärmender Luft. Die abzukühlende Luft kann die Abluft der oben beschriebenen Erfindung sein. Die aufzuwärmende Luft kann die Frischluft der oben beschriebenen Erfindung sein.

Bei Verwendung in der erfindungsgemäßen Belüftungsvorrichtung gelten die dort angegebenen Dimensionen. Soweit im Folgenden nichts anderes angegeben wird, sind sie auch die bevorzugten Dimensionen des erfindungsgemäßen Wärmetauschers und seiner Bestandteile.

Die Dimensionen des Wärmetauschers sind so ausgelegt, dass der Wärmetausch möglichst vollständig ist. Dies gilt insbesondere für die Länge des Wärmetauschers. Je größer der Temperaturunterschied zwischen Abluft und Frischluft ist, desto länger sollte - bei gleichbleibenden anderen Dimensionen - der Wärmetauscher sein. Als praktisch anwendbar haben sich Wärmetauscher mit einer Höhe von zwischen 20 cm und 5 m, bevorzugt zwischen 50 cm und 3 m erwiesen.

Hinsichtlich der anderen Dimensionen des Wärmetauschers sind die Gegebenheiten des Einbaus, wie die Dimensionen der Vorrichtung, in welcher der Wärmetauscher eingebaut werden soll, zu berücksichtigen. Insbesondere ist die Menge des Luftstroms zu berücksichtigen. In der Regel ist die Tiefe des Wärmetauschers daher kleiner als 50 cm und bevorzugt größer als 10 cm. Für die Breite des Wärmetauschers hat sich eine Ausdehnung von zwischen 1 m und 5 cm als möglich erwiesen. Der erfindungsgemäße Wärmetauscher hat daher in Strömungsrichtung seine größte Ausdehnung.

Die Kanäle werden durch in Strömungsrichtung, das heißt längs, gerippte Lamellen gebildet. Die Lamellen sind nebeneinander angeordnet, sodass sie zwischen sich alternierend Kanäle für abzukühlende und aufzuwärmende Luft bilden. Zwei nebeneinander angeordnete Lamellen sind gegenüber dem Gehäuse so abgedichtet, dass keine Luft aus dem Raum zwischen diesen Lamellen in den direkt angrenzenden Raum jeder dieser Lamellen und den jeweils nächsten Lamellen übertreten kann. Auch sind die Lamellen in sich luftundurchlässig. Die Lamellen bilden die Wärmetauschflächen zwischen aneinander angrenzenden Kanälen, durch welche die Wärme aus der abzukühlenden Luft in die aufzuwärmende Luft übertreten kann.

Die Rippen in den Lamellen können eine beliebige Form haben. Daraus ergeben sich unterschiedliche Querschnittprofile für die Lamellen in Richtung quer zur Strömungsrichtung der Luft, entlang der Breite der Lamellen. Bevorzugt ist für den Wärmetauscher ein wabenähnliches Profil, welches durch ein zick-zack-Profil, besonders bevorzugt ein gleichschenkliges Zickzack-Profil der Lamellen erzielt wird.

Die wabenartige Form des Querschnitts des Wärmetauschers im Bereich der Lamellen macht die ganze Konstruktion stabil und steif, so dass das Material sehr dünn sein kann. Dadurch wird eine hohe Wärmetauscheffizienz und Materialersparnis erzielt.

Die Dimension der Strömungskanäle wird so gewählt, dass ausreichend große Wärmetauschflächen zur Verfügung stehen. Im Fall einer üblichen Verwendung sind daher die Strömungskanäle im Wärmetauscher zwischen 30 cm und 4 m lang.

Die Breite der Kanäle, welche durch die dreidimensionale Struktur und den Abstand der Lamellen bestimmt ist, ist ebenfalls nach Bedarf zu optimieren. Sind die Kanäle zu breit, ist die Wärmetauschkapazität zu gering. Sind dagegen die Kanäle zu eng, ist der Luftströmungswiderstand zu hoch für eine ausreichende Belüftung. Im Sinne der Erfindung haben die Kanäle bevorzugt eine maximale Breite von zwischen 1 und 0,2 cm, besonders bevorzugt zwischen 2 und 0,4 cm.

Der die Lamellen aufweisende Bereich des Wärmetauschers ist wie oben beschrieben begrenzt durch je einen Verteiler. Durch sie wird die aus den Kanälen kommende Luft vereinigt bzw. die in den Wärmetauscher eintretende Luft auf die Kanäle verteilt.

Für Verteiler kommen alle Konstruktionen in Frage, durch welche die Luftströme aus Kanälen mit derselben Strömungsrichtung vereinigt werden oder sie auf selbige verteilt werden können. Bevorzugt wird durch den Verteiler auch die Strömungsrichtung geändert, besonders bevorzugt dahingehend, dass die Luft aus vertikaler Strömung in horizontale Strömung bzw. umgekehrt umgelenkt wird. Verteiler können ein- oder mehrteilig sein.

Hierzu ist der Wärmetauscher im Übergang von den Lamellen zum Verteiler so gestaltet, dass das Profil der Kanäle so abgedeckt ist, dass nur die gewünschte Luft auf die entsprechende Seite des Verteilers durchgelassen wird, die zu der gewünschten Auslassöffnung geführt werden soll.

In einer ersten Lösung dienen bevorzugt die Verteiler des erfindungsgemäßen Wärmetauschers selbst auch dazu, die Enden der Kanäle abzudecken, deren Luft nicht zu einer bestimmten Auslassöffnung des Gehäuses gelangen soll oder in die keine Luft von einer bestimmten Einlassöffnung in bestimmte Kanäle eindringen soll.

Hierzu können in dem Teil des Verteilers, der mit den Enden der Kanäle in Berührung kommt, Bauteile vorgesehen werden, mit denen die Enden der bestimmten Kanäle verschlossen werden. Dies kann beispielsweise auf sehr einfache Weise bei Verteilern geschehen, die aus Metallplatten gestanzt sind.

In einer ersten Ausführungsform ist der Verteiler eine Metallplatte, die senkrecht zu den Lamellen verläuft und ebenfalls gefaltet ist. Faltflächenwärmetauscher sind beispielsweise aus der DE 102012003544 bekannt. Diese können als Verteiler verwendet werden, wenn sie erfindungsgemäß abgewandelt werden. Hierzu wird jeweils an der Kante der Folie, die an die Kanäle angrenzt, eine Reihe von Übergängen vorgesehen, die eine Form haben, mit der nach Umfalten der Übergänge die Enden der Kanäle oder ein Teil davon verschlossen werden können. Die Übergänge haben daher die Form von Vorsprüngen, die im senkrecht abgeknickten, gefalteten Zustand die zu verschließenden Querschnitte der zu verschließenden Kanäle genau abdecken.

Der Öffnungswinkel der Falten der Verteiler liegt bevorzugt zwischen 1 und 5 Winkelgrad. Bevorzugt sind alle Winkel in einem Verteiler gleich groß. Die Größe des Öffnungswinkels ist dadurch begrenzt, dass er nicht so groß ist, dass in einer Falte sowohl ein vollständiges Ende eines Schachts für abzukühlende Luft als auch ein vollständiges Ende eines Schachts für aufzuwärmende Luft endet. Bevorzugt ist eine Falte jedoch so breit wie der Abstand zwischen den Platten oder die Breite der Kanäle. Dadurch sind die Übergänge bei jeder Falte von gleicher Form und Größe, jedoch spiegelsymmetrisch zu den Faltkanten, und können durch einmaliges Stanzen des gesamten Faltenstapels mit einer entsprechenden Matrize geformt werden.

Ein solcher Wärmetauscher ist maschinell besonders einfach herzustellen. Dieser Vorgang weist bevorzugt folgende Schritte auf. Zunächst wird ein Gehäuse in Form eines langen, quadratischen Zylinders hergestellt, der unten verschlossen ist, jedoch an den oben beschriebenen Stellen Einlass- und Auslassöffnungen für die Abluft, die Zuluft, die Frischluft und die Fortluft aufweist. In dieses Gefäß wird der untere Verteiler mit den bereits umgebogenen Vorsprüngen zum Abdecken der untenliegenden Enden der Kanäle eingebracht. Daraufhin wird der Stapel mit den aus den gerippten Lamellen geformten Kanälen eingeführt. Anschließend wird der obere Verteiler aufgesetzt. Zuletzt wird das Gehäuse von oben mit einem Deckel versehen, der die zum Einführen der Verteiler und der Lamellen verwendete Öffnung verschließt.

In einem besonders einfachen Verfahren wird ein Stapel von Lamellen mit den als Verteiler wirkenden Lenkblättern in das Gehäuse eingebracht. Danach wird das Gehäuse mit einem Deckel versehen, der die zum Einführen des Stapels verwendete Öffnung verschließt.

Alternativ kann zunächst ein Gehäuse mit einer offenen Längsseite hergestellt werde. In dieser Ausführung werden bevorzugt zunächst die Verteiler auf den Enden der Kanäle angebracht und anschließend die Kombination von der Seite in das Gehäuse eingelegt. Anschließend wird die Längsseite des Gehäuses mit einer Seitenwand geschlossen.

Ein besonders einfach herstellbarer Wärmetauscher enthält ein Wärmetauschelementepaket. Dieses Paket enthält eine Vielzahl von getrennt hergestellten einteiligen Wärmetauschelementen mit Lamellen und Lenkblättern, die so aufeinander gestapelt und miteinander verbunden werden, dass die Lamellen die Kanäle und die daran anschließenden Lenkblätter die Verteiler bilden. Diese Verbindung kann beispielsweise dadurch geschehen, dass die Wärmetauschelemente in ein gemeinsames Gehäuse eingebracht werden, oder sie durch ein umlaufendes Band zusammengehalten werden. Dieses Wärmetauschelementepaket kann in dem Wärmetauscher als getrenntes, aber passgenau eingefügtes Bauteil vorgesehen werden, sodass es dem Wärmetauscher auf einfache Weise entnommen werden und gereinigt werden kann. Andererseits kann die Verbindung der Wärmetauschelemente im Paket auch so gestaltet sein, dass die Wärmetauschelemente dem Wärmetauscher oder dem Paket einzeln wieder zu entnehmen und zu reinigen sind.

In einem bevorzugten Herstellungsverfahren des Wärmetauschers werden eine Vielzahl von Wärmetauschelementen, von denen jedes eine längs gerippte Lamelle mit je einem Lenkblatt an jedem Ende aufweist, in einem Gehäuse flächig aufeinander gestapelt, und das Gehäuse geschlossen. Besonders bevorzugt handelt es sich bei den Wärmetauschelementen um die erfindungsgemäßen Wärmetauschelemente. Das entstehende Wärmetauschelementepaket hat die Ausdehnungen wie sie oben für den Wärmetauscher angegeben wurden. Die Ausmaße der Wärmetauschelemente entsprechen den Schilderungen oben wenn unten nichts speziell angegeben ist.

Die Stirnseiten der Verteiler können gegenüber dem Gehäuse wie oben beschrieben einfach mit einer weichen Gummimatte, beispielsweise aus Moosgummi, und einem komprimierbaren Material verschlossen werden.

Die erfindungsgemäßen Wärmetauschelemente haben zumindest drei Bereiche. Den ersten Bereich bildet ein Bereich mit länglicher Form, welche längsgerippt ist, die Lamelle. Durch die Rippen wird quer zu den Rippen in der Lamelle ein Querprofil erzeugt, welches von der Form der nebeneinander liegenden Rippen abhängt. Die Rippen können eine beliebige, bevorzugt wiederkehrende Geometrie haben, bevorzugt in Form von Falten. So ist das Profil zick-zack-förmig, wenn die Lamelle in Längsrichtung gefaltet ist. Wenn die Schenkel der Falten gleichlang und die Winkel zwischen den Falten identisch sind, ergibt sich eine Lamelle, die besonders reproduzierbar hergestellt und einfach gestapelt werden kann. Durch die gleichförmige Stapelung ergeben sich gleichförmige Kanäle. Dies führt dazu, dass der Wärmetauscher ein besonders gutes Strömungsverhalten und eine hohe Wärmetauscheffizienz aufweist. Die Außenform des Profils lässt sich bevorzugt durch ein Rechteck beschreiben, wobei jeweils die Spitzen der Falten abwechselnd auf gegenüberliegenden Längsseiten des Rechtecks liegen. Das Profil der Falten ist bevorzugt spiegelsymmetrisch hinsichtlich der durch die Mitte der Lamelle in Längsrichtung senkrecht zur Lamelle verlaufenden Ebene.

Dieses Rechteck ist bevorzugt zwischen 30 cm und 5 cm (Tiefe des Wärmetauschers) lang und zwischen 2 cm und 0,2 cm (maximale Tiefe der Kanäle) breit. Der Winkel zwischen den Falten (welche die Rippen bilden) ist bevorzugt zwischen 30 und 150 Winkelgrad, besonders bevorzugt zwischen 70 und 110 Winkelgrad weit. Eine gerippte Lamelle einer Breite von 30 cm kann beispielsweise durch Falten oder Stanzen einer ebenen Platte einer Breite von zwischen ca. 120 cm und ca. 40 cm hergestellt werden.

Die Länge der gerippten Lamelle kann auf die gewünschte Länge des Wärmetauschers ausgerichtet werden. Bevorzugt ist die Lamelle bei einer Länge des Wärmetauschelements von 2 m zwischen 1,7 m und 1,8 m lang.

Den zweiten und dritten Bereich des Wärmetauschelements bilden Lenkblätter, welche an die Enden der Rippen anschließen. Die Lenkplatten dienen in dem fertig zusammengebauten Wärmetauscher als ein Teil der Verteiler. Damit der Verteiler seine Funktion der Verteilung oder Vereinigung der Luftströme erfüllen kann, sind die Lenkblätter benachbart eingebauter Wärmetauschelemente so an den Lamellen angebracht, dass das Querprofil am oberen bzw. unteren Ende der Lamelle nach einer Seite der Lamelle hin im Übergang zu einer unteren bzw. oberen Kante des Lenkblatts luftdicht geschlossen ist, wenn die Wärmetauschelemente außenbündig flächig aufeinander gestapelt werden.

Dies kann dadurch erreicht werden, dass die Seitenkante des Lenkblatts, welches auf das Querprofil der gerippten Platte trifft, diagonal zwischen sich diagonal gegenüberliegenden Ecken des oben geschilderten Rechtecks des Profils verläuft. Die mit dem Profil auf die beiden Seiten des Lenkblatts gebildeten Dreiecke des Profils sind erfindungsgemäß geschlossen, sodass durch diese Dreiecke keine Luft auf die Seite des Lenkblatts austreten bzw. von ihr aus eintreten kann, auf der sich das jeweilige Dreieck befindet. Die auf der gegenüberliegenden Seite des Lenkblatts gebildeten Trapeze hingegen sind jeweils offen. Entsprechendes gilt für von der strengen Faltenform der gerippten Platte abweichende geometrische Formen, die sich durch den diagonalen Verlauf der Seite des Lenkblatts ergeben. So können die Lenkblätter auch einen Teil haben, der dreidimensional strukturiert ist, beispielsweise durch Kerben. Diese geben dem Lenkblatt eine gewisse Stabilität und vor allem sorgen sie für optimale Luftströmung im ganzen Verteiler. Das Profil dieser Struktur unterscheidet sich jedoch in jedem Fall von dem Profil der Lamelle.

Die Geometrie des an dem gegenüberliegenden, anderen Ende des Wärmetauschelements vorgesehenen zweiten Lenkblatts ist bevorzugt analog zu der Geometrie des ersten Lenkblatts. Die Seitenkante des Lenkblatts, welche auf das dortige Ende der gerippten Lamelle trifft, kann zwischen denselben Ecken des oben genannten Rechtecks verlaufen. Wenn dann ebenfalls die wie oben beschrieben verschlossenen Dreiecke auf derselben Seite des Wärmetauschelements geschlossen sind, ergibt sich beim Zusammenbau ein Wärmetauscher, bei dem die Kanäle für die Luftströmung auf derselben Seite beginnen und enden. Dies ist bei der Konstruktion der Ein- und Auslässe des Gehäuses zu berücksichtigen. Durch in unterschiedlichen gegenüberliegenden Ecken des Rechtecks endenden Seitenkanten der beiden Lenkblätter kann erreicht werden, dass die Kanäle auf unterschiedlichen Seite beginnen und enden.

Die Stapelung der Wärmetauschelemente geschieht so, dass die Spitzen der Falten benachbarter gerippter Lamellen aufeinander zu zeigen und sich bevorzugt sogar berühren. Die Lenkblätter benachbarter Wärmetauschelemente sind so angeordnet, dass sich eine faltenförmige Anordnung der Lenkblätter ergibt. Der Winkel, unter dem die Lenkblätter benachbarter Wärmetauschelemente aufeinandertreffen, ist bevorzugt zwischen 1 und 5 Winkelgrad groß. Er ist doppelt so groß wie der spitze Winkel der Diagonalen in oben geschildertem Rechteck. Durch diesen Aufbau wird gewährleistet, dass dieselbe Art von Luft, also Abluft oder Zuluft, ohne gegenseitige Durchmischung vereint bzw. verteilt wird.

In einer besonderen Ausführungsform sind die Wärmetauschelemente identisch und die Seitenkante des Lenkblatts, welche auf das Ende der gerippten Lamelle trifft, verläuft von derselben Seite des Wärmetauschelements her gesehen zwischen denselben Ecken des Rechtecks des Lenkblatts auf der anderen Seite der Lamelle. Dann werden diese geometrisch identischen Wärmetauschelemente im Wärmetauscher um 180 Grad um die in der gerippten Lamelle liegende Querachse gedreht gestapelt. Dadurch zeigen jeweils alternierend die "unteren" Enden und die "oberen" Enden der nebeneinanderliegenden, geometrisch identischen Wärmetauschelemente in dieselbe Richtung.

Das erfindungsgemäße Wärmetauschelement kann aus einzelnen Teilen zusammengebaut werden. Dies kann jedoch gerade in dem Bereich, in dem das Lenkblatt auf die gerippte Platte trifft, den oben geschilderten Verschluss der Kanäle aufwändig machen. Bevorzugt besteht das Wärmetauschelement daher aus einem einzigen durchgängigen Formkörper, bevorzugt aus demselben Material. Das Wärmetauschelement soll sich im Betrieb des Wärmetauschers und bei seinem Zusammenbau nicht zu sehr verformen, damit die Dichtigkeit der Kanäle erhalten bleibt. Daher darf das Material nicht zu dünn sein. Im Sinne der Erfindung sorgt schon die dreidimensionale Struktur des Elements, insbesondere die im Wesentlichen senkrecht zu den Falten erfolgende Verbindung mit dem Lenkblatt dafür, dass eine statische Stabilität schon bei dünnen Elementen gegeben ist. Andererseits soll das Material nicht zu dick sein, das dies den zügigen Wärmedurchtritt durch die Lamelle erschwert.

Grundsätzlich im Sinne der Erfindung geeignetes Material für die Wärmetauschelemente sind thermoplastische Kunststoffe. Sie haben den Vorteil, dass sie einfach, beispielsweise durch Spritzgussverfahren, in relativ komplexe dreidimensionale Form gebracht werden können. Auch eine ausreichende Stabilität ist einfach zu erreichen. Allerdings haben die damit hergestellten Wärmetauscher wegen der üblicherweise geringen Wärmeleitfähigkeit der Kunststoffe eine eher geringe Effizienz, sodass die Wärmetauscher großzügiger dimensioniert werden müssen.

Das Wärmetauschelement wird daher bevorzugt aus einer dünnen Metallplatte hergestellt, die durch Stanzen oder Pressen in die gewünschte dreidimensionale Form gebracht wird. Damit die Platte einfach verformt werden kann, ist das Material dieser Platte bevorzugt ein weiches Metall, wie Aluminium, und hat eine Dicke von höchstens 0,5 mm. Andererseits darf die Platte nicht zu dünn sein, damit das Wärmetauschelement sich im Betrieb im Wärmetauscher nicht zu sehr verformt. Die Mindestdicke beträgt daher ca. 0,1 mm.

Das Wärmetauschelement hat an einer oder an beiden Längsseiten bevorzugt eine abgeknickte Kante. Dies hat sich als für die Herstellung und den passgenauen Einbau des Elements als äußerst hilfreich erwiesen. Darüber hinaus steigert sie die Längsstabilität des Wärmetauschelements und erleichtert die Positionierung bei der Herstellung und dem Einbau des Wärmetauschelements. Die Kante ist zweckmäßigerweise schmal. Die bevorzugte Breite liegt zwischen 2 mm und 3 mm. Der Abknickwinkel beträgt ca. 90 Winkelgrad. Sie erstreckt sich bevorzugt über die gesamte Länge des Wärmetauschelements.

In einer bevorzugten Ausführung werden die Wärmetauschelemente in vorgegebenem Rastermaß bereitgestellt, beispielsweise in Längen von 50 cm bis 2 m Gesamtlänge in Abständen von jeweils 25 cm. Die Wärmetauschelemente können dann vor dem Einbau in die Vorrichtung, eventuell sogar vor Ort, an die erforderliche Länge der Vorrichtung angepasst werden, beispielsweise durch teilweises Kürzen der Lenkblätter vom äußeren Rand her. Bevorzugt ist jedoch, dass die Wärmetauschelemente in dem vorgegebenen Rastermaß in den Wärmetauscher passend eingebaut werden, und ein eventuell nach oben hin noch verbleibender Raum im Gehäuse durch einen ausreichend großen komprimierbaren Schwamm ausgefüllt wird.

Die Wärmetauschelemente können dem Wärmetauscher oder dem Gehäuse zur Reinigung einfach entnommen und nach Reinigung wieder wie oben geschildert eingebaut werden.

Mit den erfindungsgemäßen Wärmetauschelementen ist ein Wärmetauscher besonders einfach und zuverlässig herzustellen und sehr effizient. Der mit diesen Wärmetauschelementen hergestellte Wärmetauscher ist somit ein besonders bevorzugter Gegenstand der Erfindung.

Die Wärmetauschelemente können hierzu einzeln in ein Gehäuse eingebracht und wie oben beschrieben gestapelt werden. Anschließend kann das Gehäuse verschlossen werden. Sie können aber auch zunächst zu einem Wärmetauschelementepaket zusammengefasst und dieses kann anschließend in das Gehäuse eingelegt werden. Diese modulare Herstellmethode ist auf dem Bau besonders bevorzugt, da die Wärmetauschelemente dann im Paket vorgefertigt angeliefert und das Paket nur noch in die Belüftungsvorrichtung eingesetzt und das Gehäuse verschlossen werden muss.

Ein weiterer Gegenstand der Erfindung ist ein Verfahren zum Einbau der erfindungsgemäßen Belüftungsvorrichtung in ein Gebäude, indem sie entweder in eine Ausnehmung in einer Fensterlaibung eingesetzt oder an in einer Wand vorgesehene, durch die Wand hindurchführende Öffnungen nach außen angeschlossen wird.

Im Folgenden wird die Erfindung anhand von Zeichnungen beispielhaft näher erläutert.

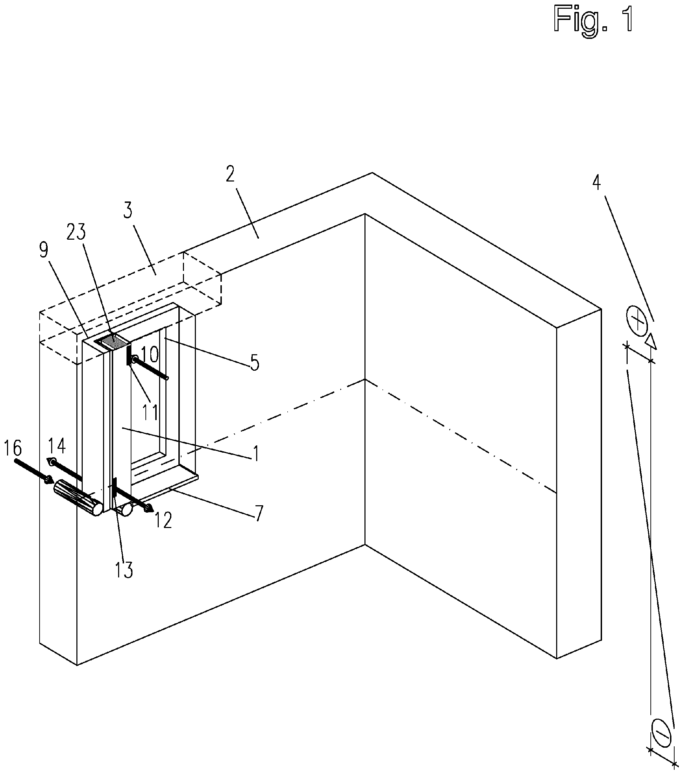

Figur 1 zeigt eine Ecke in einem Raum mit einer Mauer 2 von innerhalb eines Gebäudes. Der Raum hat in der Mauer ein Fenster 5 nach außen. Auf der rechten Seite der Zeichnung ist die Richtung der Druckzunahme 4 nach oben hin von - nach + angegeben. In halber Höhe des Raums, die gestrichelt angegeben ist, herrscht ein mittlerer Raumluftdruck. Das Fenster hat eine innenliegende Fensterbank 7. Links neben dem Fenster ist eine erfindungsgemäße Belüftungsvorrichtung 1 mit einem Wärmetauscher 23, einem Abluftauslass 11, durch den die Abluft 10 in die Belüftungsvorrichtung eintritt, und einem Zulufteinlass 13, durch den die Zuluft 12 aus der Belüftungsvorrichtung 1 in den Raum tritt, eingebaut. Die Luftstromrichtungen sind mit Pfeilen angegeben. Der Wärmetauscher 23 ist in einer Aufnahme 9 befestigt, welche fest in die Mauer integriert ist.

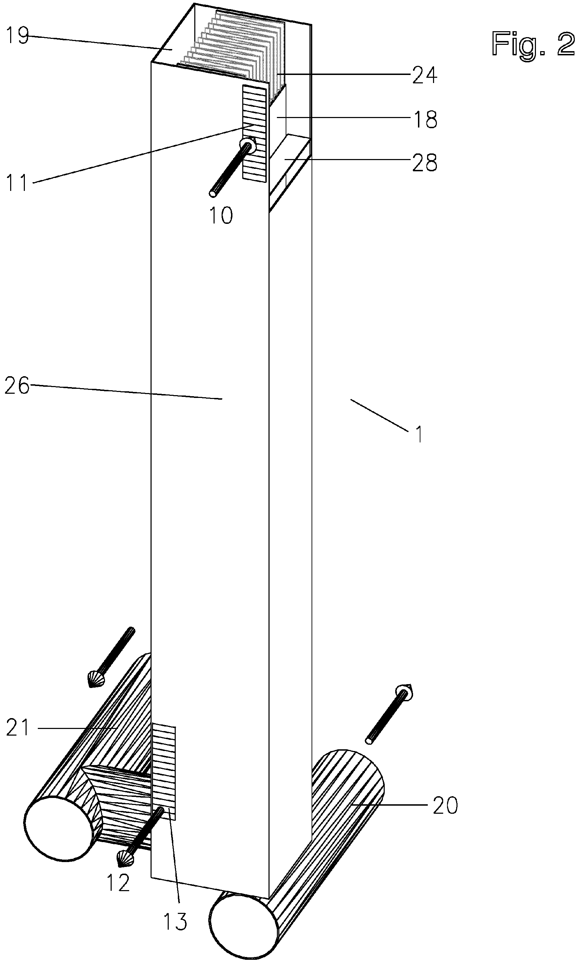

In Figur 2 ist eine erfindungsgemäße Belüftungsvorrichtung 1 mit Gehäuse 26, Abluftauslass 11 für die Abluft 10, Zulufteinlass 13 für die Zuluft 12, Abluftauslasskanal 18, Zulufteinlasskanal 19, Fortluftauslasskanal 20 und Frischlufteinlasskanal 21 in dreidimensionaler Ansicht gezeigt. Der Zulufteinlasskanal 19 erstreckt sich auf der dem Betrachter abgewandten Seite des Gehäuses von oben bis zum Zulufteinlass 12. Die Strömungsrichtungen sind mit Pfeilen angegeben. Ein Schott 28 erzwingt das Eindringen der Abluft 10 in den Verteiler 24. Die Seite des Verteilers 24 für die Abluft ist aus dieser Perspektive zu sehen. Für diese Zeichnung wurde die obere Gehäuseabdeckung sowie die obere Seite des Gehäuses im Bereich des Verteilers nicht gezeigt, damit der Verteiler 24 sichtbar ist.

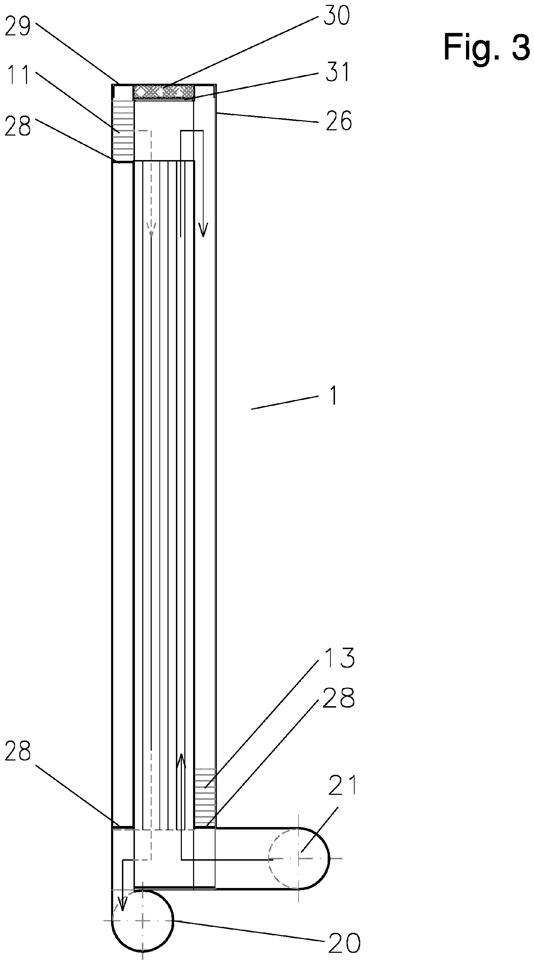

Figur 3 zeigt einen vertikalen Schnitt durch die in Figur 2 gezeigte Vorrichtung 1 im Detail. Frischluft gelangt über den Frischlufteinlasskanal 21 (in der Zeichnung von der Seite des Betrachters) in die Kanäle und wird nach innen über den Zulufteinlass 13 (in der Zeichnung auf die vom Betrachter entfernte Seite) in den Raum geleitet. Ein erstes Schott 28 im Gehäuse trennt den Zulufteinlass vom Frischlufteinlasskanal. Die Abluft gelangt durch den Abluftauslass 11 (in der Zeichnung von der vom Betrachter entfernten Seite) oben in den Wärmetauscher und tritt unten in den Fortluftauslasskanal 20 (in der Zeichnung auf die Seite des Betrachters) nach außen. Weitere Schotts 28 (in der Zeichnung im linken Teil des Gehäuses) im Gehäuse trennen die Abluft von der Fortluft. Der Verteiler 24 wird nach oben hin über einen Moosgummi 31 und einen Schwamm 30 elastisch gegen den Deckel 29 isoliert und im Gehäuse 26 fixiert.

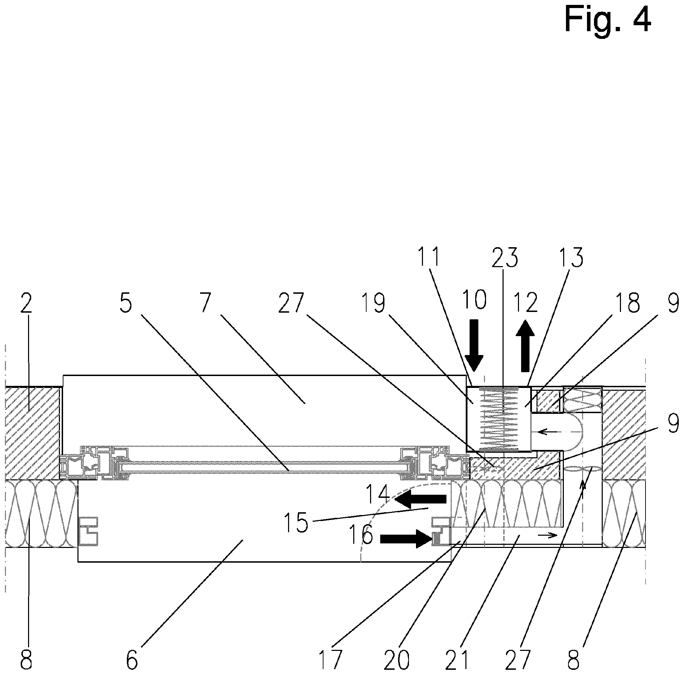

Figur 4 zeigt einen horizontalen Schnitt durch den unteren Teil der erfindungsgemäßen Vorrichtung in neben dem Fenster 5 auf der Innenseite des Raums eingebautem Zustand. Zu sehen ist die äußere Fensterbank 6, die innere Fensterbank 7, die Mauer 2, die Aufnahme 9 und die auf der Außenseite der Mauer angebrachte Thermohaut 8. Der Wärmetauscher 23 ist im Schnitt durch den unteren Verteiler zu sehen. Auf der Rauminnenseite wird die Zuluft 12 über einen Zulufteinlasskanal 19 zum Zulufteinlass 13 geführt. Die Abluft 10 wird durch den Abluftauslass 11 in den Abluftauslasskanal 18 geführt, der in den Wärmetauscher 23 mündet. Auf der Gebäudeaußenseite führt ein Frischlufteinlasskanal 21 die Frischluft 16 durch einen Filter in der Rolladenführungsleiste zum Frischlufteinlass 17 des Wärmetauschers 23. Die Fortluft 14 wird durch den Fortluftauslasskanal 20 vom Wärmetauscher 23 zum Fortluftauslass 15 geführt. Angedeutet sind die optionalen Ventilatoren 27.

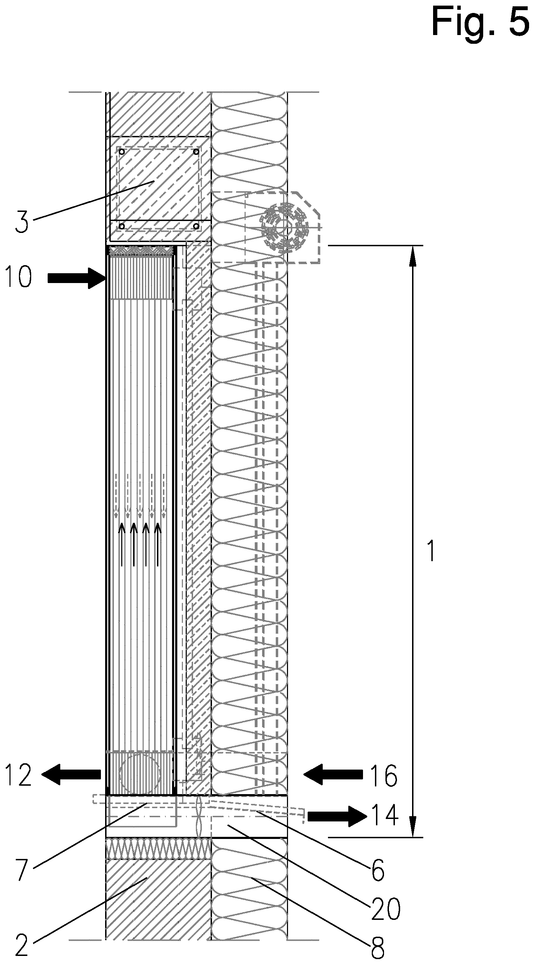

Figur 5 zeigt einen vertikalen Schnitt durch die Vorrichtung 1, die in die Mauer 2 unter dem Fenstersturz 3 eingebaut ist. Der beheizte Raum befindet sich in der Zeichnung auf der linken Seite, die rechte Seite stellt die Außenseite des Gebäudes dar. Die Thermohaut 8 dichtet das Gebäude nach außen ab. Die Fortluft 14 tritt durch den Fortluftauslasskanal 20 unter der Fensterbank 6 aus dem Gebäude. Die Zuluft 12 tritt im unteren Bereich des Fensters in den Raum ein, während die Abluft 10 den Raum im oberen Bereich des Fensters verlässt. Die Frischluft 16 tritt hier direkt über eine Öffnung in den Frischlufteinlasskanal ein.

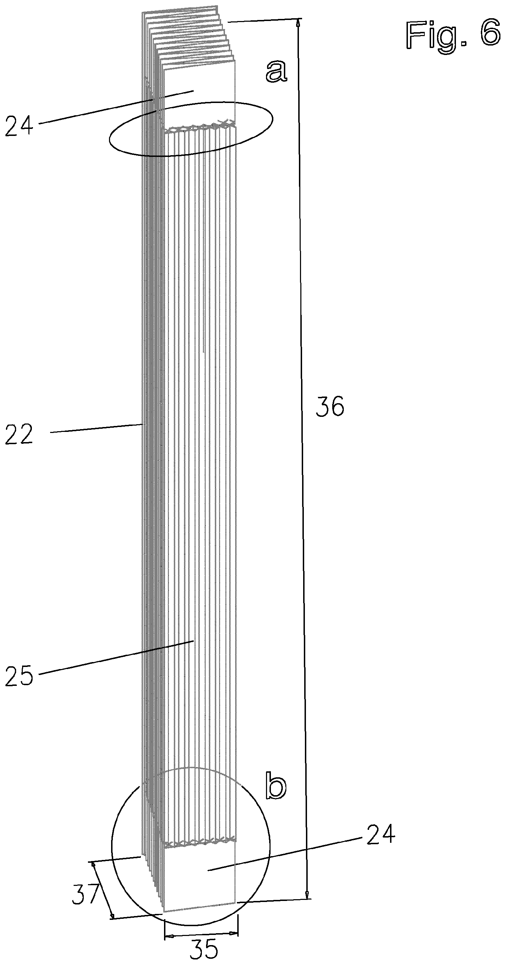

In Figur 6 ist ein Wärmetauschelementepaket 22 mit dem langen mittleren Teil, der die Kanäle 25 enthält, und je einem Verteiler 24 am unteren und oberen Ende gezeigt. Die Verteiler sind aus einzelnen Lenkblättern 42 zusammengesetzt und zeigen in zusammengebautem Zustand die Gesamtform einer gefalteten Metallfolie. In der hier gezeigten Ausführung sind die Lenkblätter 42 flache Metallplättchen.

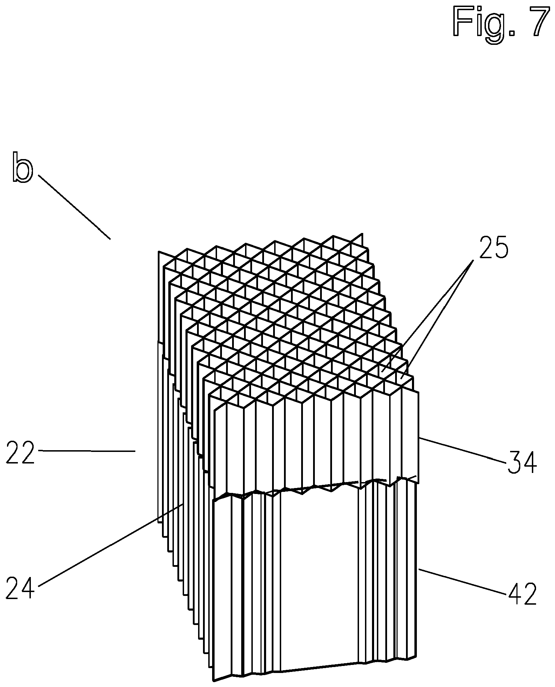

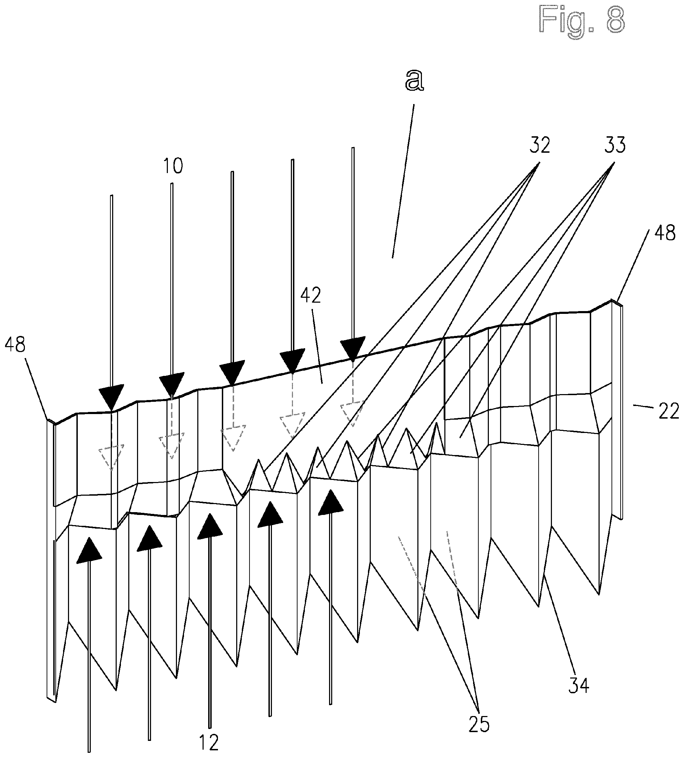

Eingekreist ist ein Bereich a, für den eine bevorzugte Ausführung in Vergrößerung in Figur 8 wiedergegeben ist, und ein Bereich b, für den eine bevorzugte Ausführung in Figur 7 zu sehen ist. Die Tiefe des Wärmetauschers ist mit dem Bezugszeichen 37, die Länge mit dem Bezugszeichen 36 und die Breite mit dem Bezugszeichen 35 markiert.

In Figur 7 ist der Ausschnitt b des unteren Teil des Wärmetauschelementepakets 22 aus Figur 6 mit einem Schnitt durch die Strömungskanäle 25 wiedergegeben, welche einen im Wesentlichen quadratischen Querschnitt haben und durch gefaltete Metallplatten gebildet werden, die nebeneinander (in der Zeichnung von hinten nach vorne) gestapelt sind, wobei sich die Faltenköpfe benachbarter Lamellen berühren. In dieser Ausführungsform weist das Lenkblatt 42 eine dreidimensionale Struktur auf, im zentralen Bereich eine glatte Fläche und in den Außenbereichen gefaltete Strukturen.

Figur 8 zeigt eine Vergrößerung des in Figur 6 mit a gekennzeichneten Bereiches des ersten Wärmetauschelements für die bevorzugte Ausführung in Figur 7. Im oberen Teil ist der untere Teil eines Lenkblatts 42 des Verteilers zu sehen. Die durch die Lamelle 34 gebildeten hinteren Kanäle 25 sind teilweise durch Übergänge 32 (in Form von pyramidalen Übergängen) des Verteilers verschlossen, sodass der Abluftstrom 10 nicht aus diesen Kanälen in die Kanäle für den im Vordergrund liegenden Zuluftstrom (nach oben) eindringen kann, sondern in den im Hintergrund liegenden Bereich des Ablufteinlasses (nach unten) in die (Abluft-)Kanäle eintritt. Umgekehrt sind die Kanäle für die Zuluft durch Übergänge 33 gegen die Abluft verschlossen. Die entsprechenden Luftströme sind mit Pfeilen gekennzeichnet. Die im Hintergrund in die Kanäle eintretenden Abluftströme sind, soweit sie hinter dem Verteiler liegen, gestrichelt wiedergegeben.

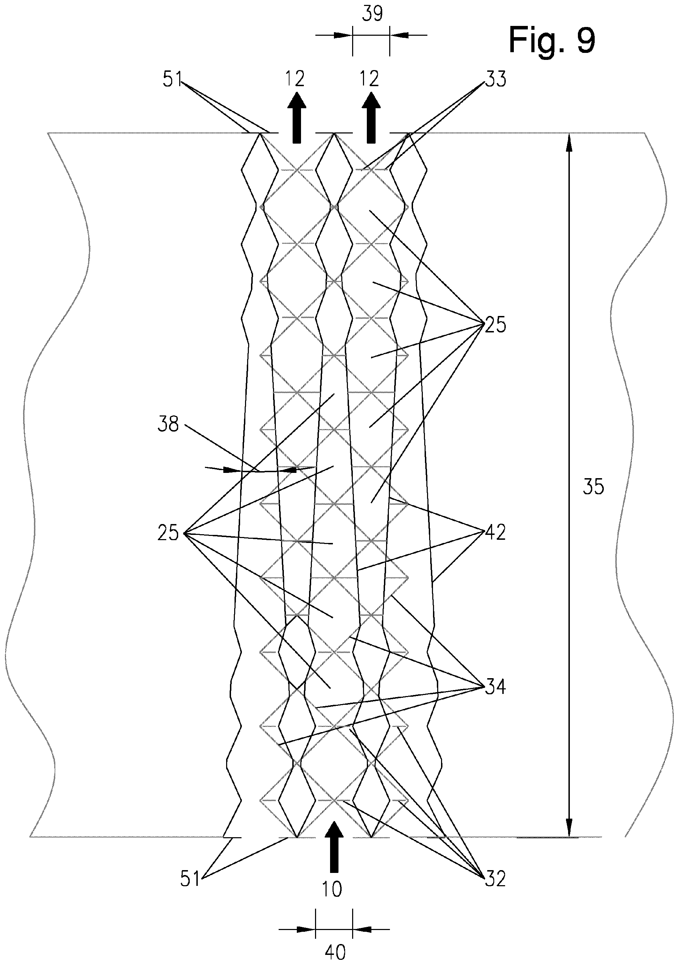

Figur 9 zeigt den Ausschnitt einer Sicht von oben auf die Kanäle 25 durch den mit dem Öffnungswinkel 38 im zick-zack-Profil gefaltet angeordneten Lenkblättern 42 des Verteilers. Die Breite der Falte für die Zuluft 12 ist mit dem Bezugszeichen 39 gekennzeichnet, die der danebenliegenden Falte für die Abluft 10 mit dem Bezugszeichen 40. Die im Querschnitt im Wesentlichen quadratischen durch die Lamellen 34 gebildeten Kanäle 25 für die Zuluft 12 sind im Bereich der rechten Falte nicht durch Abdeckungen 33 abgedichtet, wohl aber im Bereich der links danebenliegenden Falte (durch die Abdeckungen 32). In der rechten Falte sind wiederum die Kanäle 25 mit der Abluft 10 durch die Übergänge 33 abgedeckt, sodass keine Abluft 10 in die Zuluft übertreten kann. Die Kanten der Übergänge 33 zum Abdichten der Abluftkanäle und die Kanten der Übergänge 32 zum Abdichten der Kanäle 25 für die Zuluft sind als Striche angedeutet. Die Breite des Wärmetauschers ist mit dem Bezugszeichen 35 markiert.

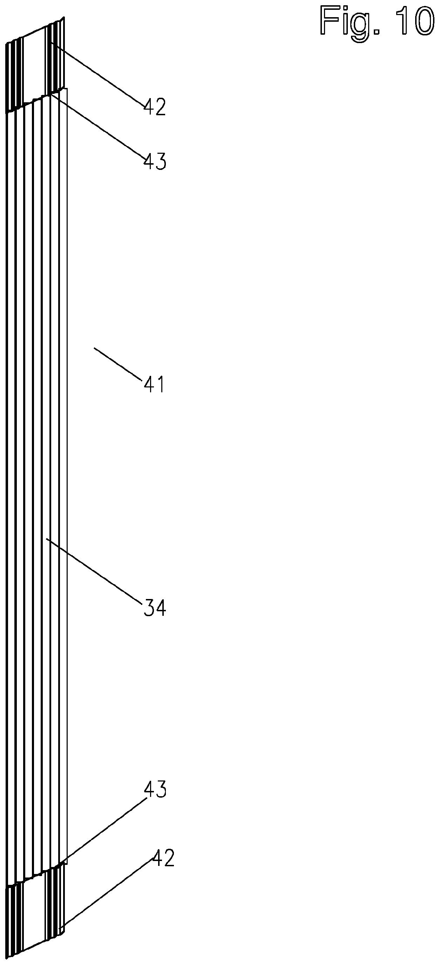

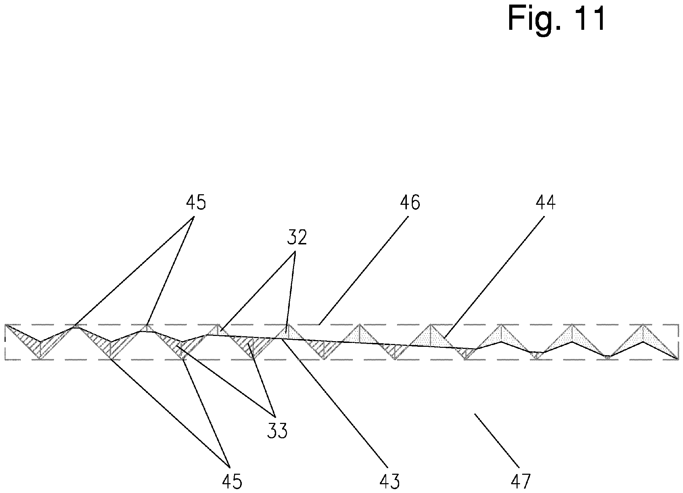

Figur 10 zeigt ein erfindungsgemäßes Wärmetauschelement 41 mit einer längs gerippten Lamelle 34 und zwei an deren schmalen Seiten angrenzenden Lenkblättern 42. Im gezeigten Fall zeigen die Seitenkanten 43 der Lenkblätter in dieselben Ecken des in Figur 11 gezeigten Rechtecks des Querprofils der gerippten Lamelle 34.

Figur 11 zeigt das Querprofil 44 einer gerippten Lamelle 34 in Faltenform. Die Spitzen 45 der Falten zeigen abwechselnd auf gegenüberliegende Seiten 46 des das Profil aufspannenden Rechteckes 47 (gestrichelt gezeichnet). Die geschlossenen Dreiecke der Übergänge 32 und 33 sind schraffiert (erste Strömungsrichtung) bzw. gepunktet (zweite Strömungsrichtung) gezeichnet. Durch die Form der Lenkblätter wird erreicht, dass die offenen Enden der Kanäle ähnlich groß sind.

Durch die vorliegende Erfindung können Räume mit geringen Wärmeverlusten und ohne zusätzlichen Energiebedarf für mechanische Strömungsunterstützung belüftet werden. Dies gilt sowohl für mit einer Heizung beheizte als auch nur durch die menschliche Körpertemperatur beheizte Räume. Die Belüftungsanlage ist so konstruiert, dass die Kapazität der Lüftungsanlage einfach (ohne irgendeine größere Änderungsmaßnahme) durch zwei Niedrigstleistungslüfter von jeweils unter 10W deutlich erhöht werden kann (z.B. wenn sich im Raum ungewöhnlich viele Personen befinden und die Wärme- und Feuchtigkeitsentwicklung kurzfristig erhöht ist oder zwischen außen und innen kein Temperaturunterschied besteht). In ein bzw. Zweifamilienhäusern kann bei höheren Außentemperaturen eine ganze Etage mit kühler Luft von der Nordseite in Richtung auf die Südseite hin durchspült werden, wenn mindestens zwei Belüftungsvorrichtungen eingebaut werden. Dazu wird auf einer Seite kühlere Frischluft angesaugt und auf der gegenüberliegenden Seite durch geöffnete Innentüren abgepumpt.

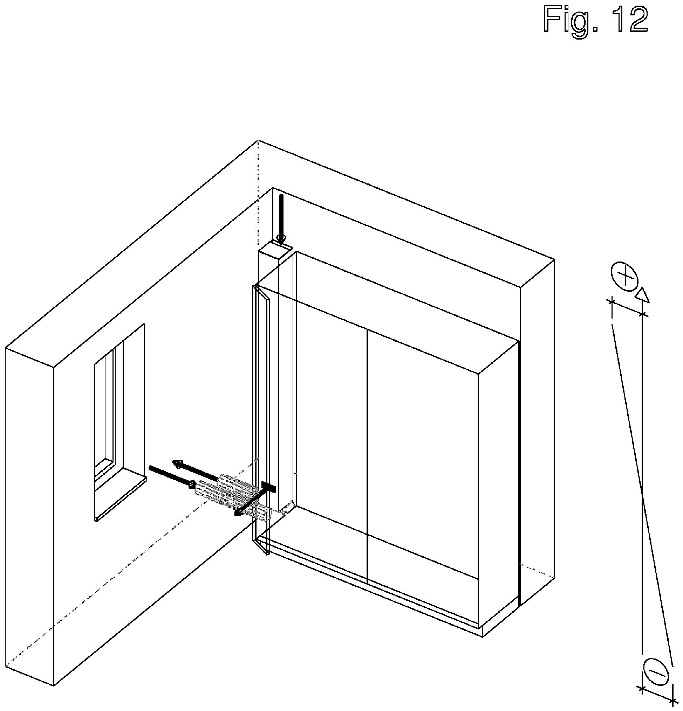

Figur 12 zeigt den Raum aus Figur 1, wobei aber die erfindungsgemäße Belüftungsvorrichtung anstelle neben dem Fenster in einer Ecke des Raumes eingebaut ist. Dies kann, wie angedeutet, sogar versteckt hinter einem angedeutet gezeichneten Schrank geschehen.

### Beispiel

### Herstellung der erfindungsgemäßen Wärmetauschelemente, des Wärmetauschers und Einbau in die Belüftungsvorrichtung

An den langen Seiten um 90 Winkelgrad um 2 mm gekantete Aluminiumplatten einer Dicke von 0,2 mm und einer Ausdehnung von 100x1280 mm wurden in einer Stanze mit einer Form für 9,5 Rillen einer Tiefe von 5 mm mit einem Faltenwinkel von 90 Winkelgrad und den geometrischen Verhältnissen eines Lenkblatts einschließlich der Übergänge nach Figur 8, 9 und 11 in die dreidimensionale Form der Figur 10 gebracht. Die fertigen Elemente hatten ein Ausmaß von 5x95x1280 mm.

Die so hergestellten Elemente wurden in ein erstes zylindrisches, oben und unten offenes Gehäuse mit den Ausmaßen 160x100x1330 mm gebracht und abwechselnd um 180° gedreht gestapelt, bis das erste Gehäuse voll war. Anschließend wurde das erste Gehäuse in ein zweites Gehäuse der Außenmaße 175x175x1350 mm eingeschoben, wobei zwei Schächte von jeweils 35mm Tiefe nach außen bzw. innen hin freiblieben, die durch Schotts gemäß Figur 2 und 3 geschlossen waren.

Diese Kombination wurde in die Fensterlaibung neben ein Fenster eingesetzt. Hierzu war auf der linken Seite (siehe Figur 1) eine rechtwinklige Aufnahme (9) in die Fensterlaibung eingepasst, in welches der Fortluftauslasskanal von unten über die Unterseite der äußeren Fensterbank und der Frischlufteinlasskanal von der Seite in Höhe des unteren Verteilers (siehe Figur 3 bis 5) mündeten.

### Bezugszeichenliste

1 Belüftungsvorrichtung
2 Mauer
3 Fenstersturz
4 Richtung der Druckzunahme
5 Fenster
6 Fensterbank außen
7 Fensterbank innen
8 Thermohaut
9 Aufnahme für den Wärmetauscher
10 Abluft
11 Abluftauslass
12 Zuluft
13 Zulufteinlass
14 Fortluft
15 Fortluftauslass
16 Frischluft
17 Frischlufteinlass
18 Abluftauslasskanal
19 Zulufteinlasskanal
20 Fortluftauslasskanal
21 Frischlufteinlasskanal
22 Wärmetauschelementpaket
23 Wärmetauscher
24 Verteiler
25 Kanal
26 Gehäuse
27 Ventilator
28 Schott
29 Deckel
30 Schwamm
31 Moosgummi
32 Übergang für einen Kanal für die Zuluft
33 Übergang für einen Kanal für die Abluft
34 Lamelle
35 Breite des Wärmetauschers
36 Höhe des Wärmetauschers
37 Tiefe des Wärmetauschers
38 Öffnungswinkel einer Falte
39 Falte für die Zuluft mit Breite
40 Falte für die Abluft mit Breite
41 Wärmetauschelement
42 Lenkblatt
43 Seitenkante eines Lenkblatts
44 Querprofil der Lamelle
45 Spitze einer Falte
46 Seite des Rechtecks
47 Rechteck
48 Kante
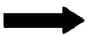 Strömungsrichtung

## Patentansprüche

1. Belüftungsvorrichtung für in einem Gebäude belegene beheizte Räume, durch welche Abluft (10) aus dem Inneren des Raums nach außerhalb des Gebäudes und Frischluft (16) von außerhalb des Gebäudes in das Innere des Raums geführt wird, enthaltend einen vertikal in eine Mauer des Gebäudes eingebauten Gegenstromwärmetauscher (23), über welchen die Abluft (10) Wärme an die Frischluft (16) abgibt, wobei die Vorrichtung raumseitig im oberen Teil der Vorrichtung einen Auslass (11) für nach außerhalb des Gebäudes zu verbringende Abluft (10) und im unteren Teil einen Einlass (13) für von außerhalb des Gebäudes kommende Zuluft (12) aufweist, **dadurch gekennzeichnet, dass** der Gegenstromwärmetauscher (23) von oben von dem Ablufteinlass (11) nach unten zu einem im unteren Bereich der Belüftungsvorrichtung platzierten Fortluftauslass (15) verlaufende Kanäle (25) für die Durchströmung mit der Abluft (10) und hierzu gegenläufig parallel angrenzende von unten von einem im unteren Bereich der Belüftungsvorrichtung platzierten Frischlufteinlass (17) nach oben verlaufende Kanäle (25) sowie einen von oben nach unten zum Einlass (13) führenden Zulufteinlasskanal (19) für die Durchströmung mit der Frischluft (16) enthält, wobei die Kanäle (25) durch in Strömungsrichtung gerippte, luftundurchlässige Lamellen (34) gebildet sind.

2. Vorrichtung nach Anspruch 1, **dadurch gekennzeichnet, dass** der Gegenstromwärmetauscher (23) zur Reinigung oder zum Ersatz entnehmbar ist.

3. Vorrichtung nach einem der Ansprüche 1 oder 2, **dadurch gekennzeichnet, dass** an einem Ende der Kanäle (25) ein Verteiler (24) zur luftdichten Verteilung des Luftstroms der Abluft (10) auf die Kanäle (25) für die Abluft (10) und zur Zusammenführung der Luftströme der aufgewärmten Luft (12) aus den Kanälen (25) für die Frischluft (16) vorgesehen ist.

4. Vorrichtung nach Anspruch 3, **dadurch gekennzeichnet, dass** der Verteiler (24) an dem an die Kanäle (25) angrenzenden Teil Mittel (33) zur Abdeckung der Kanäle für die Frischluft (16) und Mittel (32) zur Abdeckung der Kanäle (25) für die Abluft (10) aufweist.

5. Vorrichtung nach einem der Ansprüche 3 oder 4, **dadurch gekennzeichnet, dass** der Verteiler (24) die Form einer Platte hat, welche über die gesamte Breite der gerippten Lamellen (34) Falten (39, 40) aufweist, wobei die Kanäle für die Abluft (10) auf der einen Seite der Platte und Kanäle für die aufgewärmte Luft (16) auf der anderen Seite der Platte enden.

6. Vorrichtung nach einem der Ansprüche 3 bis 5, **dadurch gekennzeichnet, dass** der Gegenstromwärmetauscher (23) ein Paket (22) von getrennt hergestellten und einteiligen Wärmetauschelementen enthält und der Verteiler (24) durch Lenkblätter (42) der Wärmetauschelemente gebildet wird.

7. Vorrichtung nach einem der Ansprüche 5 oder 6, **dadurch gekennzeichnet, dass** die Wärmetauschelemente Lamellen (34) mit längs angeordneten Rippen enthalten, wobei je ein Lenkblatt (42) an beiden Enden der Rippen vorgesehen ist und das Querprofil der Lamellen (34) an den Enden der Rippen im Übergang zu den Lenkblättern luftdicht geschlossen ist.

8. Vorrichtung gemäß Anspruch 7, **dadurch gekennzeichnet, dass** die Wärmetauschelemente geometrisch identisch und im Wärmetauscher um 180 Grad um die in der gerippten Lamelle liegende Querachse gedreht gestapelt sind.

9. Verfahren zum Einbau einer Belüftungsvorrichtung gemäß einem der Ansprüche 1 bis 8 in ein Gebäude, **dadurch gekennzeichnet, dass** sie entweder
• in eine Ausnehmung in einer Fensterlaibung eingesetzt wird, oder
• an in einer Wand vorgesehene, durch die Wand hindurchführende Öffnungen angeschlossen wird.

## Claims

1. A ventilation device for heated rooms located in a building, through which exhaust air (10) from the interior of the room is led to the outside of the building and fresh air (16) is led from the outside of the building into the interior of the room, containing a counter flow heat exchanger (23) vertically installed in a wall of the building, via which the exhaust air (10) provides heat to the fresh air (16), the device, on the room side, in the upper part of the device, having an outlet (11) for exhaust air (10) to be brought to the outside of the building, and, in the lower part, having an inlet (13) for supply air (12) coming from the outside of the building, **characterized in that** the counter flow heat exchanger (23) contains channels (25) extending from above from the exhaust air inlet (11) downwards to an exhaust air outlet (15) placed in the lower region of the ventilation device for the flow of the exhaust air (10), and in counter-parallel direction contains adjoining channels (25) extending upwards from below from a fresh air inlet (17) located in the lower region of the ventilation device, and contains a supply air inlet channel (19) extending from top to bottom to the inlet (13) for the flow of fresh air (16), the channels (25) being formed by air-impermeable lamellae (34) ribbed in the direction of flow.

2. The device according to claim 1, **characterized in that** the counter flow heat exchanger (23) is removable for cleaning or replacement.

3. The device according to any of claims 1 or 2, **characterized in that** a distributor (24) is provided at one end of the channels (25) for the airtight distribution of the air flow of the exhaust air (10) to the channels (25) for the exhaust air (10) and for combining the air flows of the heated air (12) from the channels (25) for the fresh air (16).

4. The device according to claim 3, **characterized in that** the distributor (24) contains, in the part adjacent to the channels (25), means (33) for covering the channels for the fresh air (16) and means (32) for covering the channels (25) for the exhaust air (10).

5. The device according to any of claims 3 or 4, **characterized in that** the distributor (24) has the shape of a plate having folds (39, 40) over the entire width of the ribbed lamellae (34), the channels for the exhaust air (10) ending on one side of the plate and channels for the heated air (16) ending on the other side of the plate.

6. The device according to any of claims 3 to 5, **characterized in that** the counter flow heat exchanger (23) comprises a package (22) of separately manufactured and one-piece heat exchange elements and the distributor (24) is formed by steering blades (42) of the heat exchange elements.

7. The device according to any of claims 5 or 6, **characterized in that** the heat exchange elements contain lamellae (34) with longitudinally arranged ribs, a steering blade (42) being provided at both ends of the ribs and the transverse profile of the lamellae (34) is closed in airtight manner at the ends of the ribs in the transition to the steering blades.

8. The device according to claim 7, **characterized in that** the heat exchange elements are geometrically identical and stacked in the heat exchanger rotated by 180 degrees about the transverse axis lying in the ribbed lamella.

9. A method of installing a ventilation device according to any of claims 1 to 8 in a building, **characterized in that** it is either
• inserted into a recess in a window reveal, or
• connected to openings provided in a wall and leading through the wall.

## Revendications

1. Dispositif de ventilation pour des locaux chauffés occupés dans un bâtiment, par lequel l'air extrait (10) de l'intérieur du local est conduit vers l'extérieur du bâtiment et l'air frais (16) de l'extérieur du bâtiment est conduit vers l'intérieur du local, comprenant un échangeur de chaleur à contre-courant (23) installé verticalement dans un mur du bâtiment, par lequel l'air extrait (10) dégage de la chaleur vers l'air frais (16), le dispositif ayant, du côté du local, dans la partie supérieure du dispositif, une sortie (11) pour l'air extrait (10) à porter vers l'extérieur du bâtiment et, dans la partie inférieure, ayant une entrée (13) pour l'air d'alimentation (12) provenant de l'extérieur du bâtiment, **caractérisée en ce que** l'échangeur de chaleur à contre-courant (23) contient des canaux (25) s'étendant du haut l'entrée d'air extrait (11) vers le bas jusqu'à une sortie d'air extrait (15) pour l'écoulement de l'air extrait (10) placée dans la zone inférieure du dispositif de ventilation , et à ce dernier parallèlement dans la direction opposée des canaux (25) adjacents s'étendant vers le haut depuis le bas à partir d'une entrée d'air frais (17) placée dans la région inférieure du dispositif de ventilation, et un canal d'entrée d'air d'alimentation (19) menant de haut en bas à l'entrée (13) pour l'écoulement d'air frais (16), où les canaux (25) sont formés par des lamelles imperméables à l'air (34) nervurées dans le sens de l'écoulement.

2. Dispositif selon la revendication 1, **caractérisé en ce que** l'échangeur de chaleur à contre-courant (23) peut être retiré pour être nettoyé ou remplacé.

3. Dispositif selon l'une des revendications 1 ou 2, **caractérisé en ce qu'**un distributeur (24) à une extrémité des canaux (25) est prévu, pour la répartition du flux de l'air d'air de l'air extrait (10) vers les canaux (25) pour l'air extrait (10) et pour la combinaison des flux d'air de l'air d'alimentation (12) provenant des canaux (25) pour l'air frais (16).

4. Dispositif selon la revendication 3, **caractérisé en ce que** le distributeur (24), sur la partie adjacente aux canaux (25), comprend des moyens (33) pour recouvrir les canaux pour l'air frais (16) et des moyens (32) pour recouvrir les canaux (25) pour l'air extrait (10).

5. Dispositif selon l'une des revendications 3 ou 4, **caractérisé en ce que** le distributeur (24) a la forme d'une plaque qui présente des plis (39, 40) sur toute la largeur des lamelles nervurées (34), où les canaux pour la L'air extrait (10) se terminent d'un côté de la plaque et les conduits pour l'air d'alimentation (16) se terminent de l'autre côté de la plaque.

6. Dispositif selon l'une des revendications 3 à 5, **caractérisé en ce que** l'échangeur de chaleur à contre-courant (23) contient un emballage (22) d'éléments d'échange thermique mono-pièce fabriqués séparément, et le distributeur (24) est formé par des lames de direction (42) des éléments d'échange thermique.

7. Dispositif selon l'une des revendications 5 ou 6, **caractérisé en ce que** les éléments d'échange thermique contiennent des lamelles (34) à nervures disposées longitudinalement, dans lesquelles une lame de direction (42) est prévue aux deux extrémités des nervures, et le profil transversal des lamelles (34) aux extrémités des nervures dans la transition vers les lames de direction sont fermées hermétiquement.

8. Dispositif selon la revendication 7, **caractérisé en ce que** les éléments d'échange thermique sont géométriquement identiques et se trouvant empilés en rotation dans l'échangeur de chaleur de 180 degrés autour de l'axe transversal des lamelles nervurées.

9. Procédé d'installation d'un dispositif de ventilation selon l'une des revendications 1 à 8 dans un bâtiment, **caractérisé en ce qu'**il est soit
• est inséré dans un renfoncement d'une fenêtre, ou
• est connecté aux ouvertures prévues dans un mur et traversant le mur.
